# EUROPEAN PATENT APPLICATION

(11) **EP 4 321 650 A1**
(43) Date of publication of application: **14.02.2024**
(21) Application number: 22189694.7
(22) Date of filing: 10.08.2022
(51) Int. Cl.: C23F 1/30, C23F 1/44, C22B 7/00, C21B 3/04, C22B 19/30, C22B 19/20, C22B 3/00

(54) **PROCESS FOR DE-ZINCING OF GALVANIZED STEEL SCRAP**

(71) Applicant: Xtract GmbH, 78467 Konstanz (DE)
(72) Inventor: Auer, Gerhard, 78467 Konstanz (DE)
(74) Representative: Hoffmann Eitle

(57) **Abstract**

The present invention relates to waste treatment and provides a process for depletion of zinc from Zn-coated Fe by subjecting the Zn-coated Fe to a leaching step in a waste-derived acidic solution comprising Fe³⁺ to provide an acidic solution containing Zn²⁺ and Fe²⁺; obtaining a metallic Fe substrate depleted from zinc; and separating Fe²⁺ from Zn²⁺ to provide a Zn²⁺-containing product and a Fe²⁺ salt.

## Description

### Background

Galvanization is the process of coating steel with a thin zinc layer for improved corrosion resistance. The Zn coating is a thin layer of metallic zinc that may also include some dopants, e.g. Al, Sn, Ni, Co, Fe. Galvanization can be performed by electrolytic deposition (electrogalvanization) or by dipping the steel body into a liquid of molten zinc. Since galvanization generally improves the steel properties, for example with respect to corrosion resistance, galvanized steel, with a zinc layer making up 3 to up to 40 kg per ton of steel, is a common industrial product.

However, for the recycling of steel, the Zn coating is undesired because the Zn coating evaporates at higher temperatures resulting in significant amounts of Zn in the flue gas. Scrap comprising Zn coating (galvanized steel scrap or galvanized scrap) has thus a lower value compared to Zn-free scrap, and there exist many attempts in the art to de-zinc the galvanized steel scrap.

There are different options for depletion of Zn from the galvanized steel scrap:
- Pyrometallurgical
- Hydrometallurgical with alkaline leaching
- Hydrometallurgical with acidic leaching

While the performance of acidic leaching is generally better than the one of alkaline leaching, it entails a significant disadvantage, namely that the acidic solution not only leaches Zn, but also Fe. Consequently, the resulting material is not suitable for electrowinning (pure) Zn metal, unless an additional separation step to purify Zn is done. Such an additional separation step is required even if means for minimizing Fe leaching are implemented, e.g. by monitoring the electric potential by placing a reference electrode in the leach solution, measuring the corrosion potential and stopping the reaction when the measured potential arrives at a plateau, as taught in US2015/0259766.

Consequently, acidic de-zincing of galvanized steel scrap for electrowinning of metallic zinc is considered to be economically unfavorable in the art (see, for example, DEZINCING OF GALVANIZED STEEL by J. Grogan, Colorado Scholl of Mines: https://pdfcoffee.com/qdownload/dezincinc-of-galvanized-steel-pdf-pdf-free.html, p. 75, lines 15-16).

### Summary of the invention

In view of this prior art, the present invention addresses the need to provide an efficient and economic process for recycling Zn-coated Fe such as galvanized steel scrap.

The inventor found that the use of a waste-derived acidic solution comprising Fe³⁺ for leaching combines technical and economic advantages in a way which, surprisingly, overcomes the previously known drawbacks of acidic leaching: Fe³⁺ is not only an oxidation agent resulting in an acceleration of Zn leaching, but also generates Fe²⁺ in the leaching step from an otherwise useless waste material, making the separation step suitable for the production of Fe²⁺ salt and thus industrially feasible.

The present invention thus provides a process for depleting metallic Zn from Zn-coated Fe (such as zinc-coated scrap or galvanized steel scrap, respectively), comprising the following steps:
a) Subjecting the Zn-coated Fe to a leaching step in a waste-derived acidic solution comprising Fe³⁺ to provide an acidic solution containing Zn²⁺ and Fe²⁺;
b) Obtaining a metallic Fe substrate depleted from zinc; and
c) Separating Fe²⁺ from Zn²⁺ to provide a Zn²⁺-containing product and a Fe²⁺ salt.

A waste-derived acidic solution is an acidic solution that has been obtained from treatment of a waste product with acid.

In a preferred embodiment, the waste-derived acidic solution used in step a) is obtained by subjecting electric arc furnace dust (EAFD) to an acid treatment.

Step c) provides two different products, a Zn²⁺-containing product and a Fe²⁺-salt.

The Zn²⁺-containing product obtained in step c) is preferably ZnS obtained from precipitation and is used after conversion into ZnSO₄ to producing metallic Zn by electrowinning. The Fe²⁺ salt is preferably FeCl₂ or FeSO₄, which, after optional purification, can be sold for wastewater treatment, as chromate reducing agent for cement or as animal food additive.

### Detailed description

### The acidic waste derived solution and the leaching step

The acidic waste-derived solution can be obtained by reacting waste products with fresh or waste acids. The waste products or waste acids may be any waste H₂SO₄ (or spent H₂SO₄ or thin H₂SO₄), e.g. from TiO₂ production using the sulfate process, waste acidic solutions from manufacturing of zinc, any waste HCl, steel pickling solutions comprising FeCl₂ or FeSO₄, waste metal chlorides from TiO₂ chlorination of TiO₂ manufacturing using the chloride process, iron chloride solutions from production of synthetic rutile, or any waste acids comprising Fe³⁺, or waste acids used for dissolving of Fe oxides or hydroxides, or combinations of the waste products listed above. The pH of the acidic waste-derived solution is preferably 1.5 or lower.

Preferably the following industrial residues comprising Fe can be dissolved in or leached with acids:
- EAFD (typically 20-50% Fe; 10-40% Zn)
- EAFD from stainless steel production (comprising Cr and Ni)
- Slags from lead industry
- Jarosite or Goethite as waste from zinc industry; Jarosite = MFe₃(OH)₆(SO₄)₂ with M = Na, K or NH₄
- Dusts from cupola furnaces
- Stainless steel production dust
- Blast furnace dust and sludge (typically 30-40% Fe; 1-8% Zn)
- Basic oxygen furnace (BOF) dust and sludge (up to 70% Fe; <5% Zn)

Also, the following industrial residues comprising Zn can be dissolved in or leached with acids, given Fe is adjoined into the acidic solution by using acids comprising Fe or by combination with one of the residues listed above:
- Zinc ash
- Zinc skimmings
- Brass ash

Jarosite is obtained in primary zinc manufacturing by precipitation at 95°C and pH 3.5. As Jarosite mainly is landfilled any use of Jarosite generates additional value due to avoiding landfilling cost. Same applies for Goethite that is obtained as waste in primary zinc manufacturing. For properties and hydrometallurgic treatment of Jarosite see WO 2018/109283.

A further option is leaching of Fe oxides or compositions comprising Fe oxides and/or metallic Fe. It is also possible to using spent acid comprising Fe²⁺ and/or Fe3+ as leaching agent. Any of these options can be combined resulting in a high degree of freedom for choosing the best scenario from technical, economical and logistic point of view.

Preferably the waste derived acidic solution is based on H₂SO₄ or HCl. Depending on waste materials used the acid base can be selected accordingly. For example, recycling steel pickling solutions comprising FeCl₂ should prefer a HCI based matrix. Solutions comprising FeSO₄ should prefer a H₂SO₄ based matrix. If there is free choice, e.g., when dissolving EAFD in acid, the sulfate-based matrix is most preferred, as the FeSO₄ ^{∗} 7 H₂O crystals take a significant amount of water out of the system.

Preferably the waste-derived acidic solution used in the process of the present invention comprises Zn²⁺ obtained from leaching industrial waste materials comprising Zn (see above) with acids, most preferably H₂SO₄. Most preferably, the acidic solution is prepared by leaching of electric arc furnace dust (EAFD) with sulfuric acid (World of Metallurgy - ERZMETALL 75 (2022) No.1, 28-35).

A preferred embodiment of the invention is
- leaching a Zn containing waste material, preferably EAFD, with H₂SO₄
- separating undissolved material and obtaining a waste-derived acidic solution comprising H⁺, Zn²⁺, and Fe³⁺
- using the waste-derived acidic solution for depletion of zinc from galvanized steel scrap or a composition comprising galvanized steel scrap
- obtaining scrap depleted from zinc and a solution comprising ZnSO₄ and FeSO₄
- separating Fe²⁺ from Zn²⁺ to provide a Zn²⁺-containing product and a Fe²⁺ salt.

Dissolving EAFD in H₂SO₄ can be done in a single step reaction with concentrated H₂SO₄ or in two-step dissolution with diluted H₂SO₄ in step 1 and concentrated H₂SO₄ in step 2. The diluted H₂SO₄ can be any waste H₂SO₄, or the solution obtained after crystallization and separation of FeSO₄ ^{∗} 7 H₂O according to the inventive process. The acidic solution resulting from EAFD dissolving comprises H⁺, Fe³⁺, and Zn²⁺, and can comprise Fe²⁺.

After reaction of the waste material with acid the dissolution in water or diluted acid can be done using reducing agents. Preferably, metallic Zn or Fe from scrap or H₂ generated during Zn leaching can be used.

In normal acidic leaching Zn is oxidized by H⁺, which is known to lead to kinetic problems due to overpotential associated with H₂ generation. In contrast, according to the present invention, Fe³⁺ is an oxidation agent for metallic Zn. This avoids or at least reduces the kinetic problems with overpotential for H₂ generation and thus generally results in an accelerated Zn leaching. Moreover, H₂ generation can be reduced or even avoided completely, and the reducing power of Zn is not useless but is highly valuable for reduction of Fe³⁺ instead of H₂ being blown off

Preferably, the waste-derived acidic solution comprising Fe³⁺ is used in an amount so that at the beginning of the process, there is an excess of Fe³⁺ with respect to metallic Zn provided as coating. More preferably, the atomic ratio Fe³⁺/Zn⁰ is > 2, even more preferably >4, most preferably >10. Resulting from this some metallic Fe may be consumed for reduction of Fe3+.

This allows a more thorough leaching for better Zn removal. If scrap is in the form of pressed packages, some surface area coated with Zn is not directly accessible for leaching agents. Consequently, a certain degree of "overleaching" can help approaching (close to) 100% Zn depletion; "hot dipped" Zn layers comprise Zn-Fe interlayers that can result in co-leaching of metallic Fe. This "overleaching" (meaning dissolving some metallic Fe from the scrap) can be done to variable extent depending on chemical and economic conditions:
A slight "overleaching" saves metallic Fe for further use (e.g. in steelmaking), a moderate "overleaching" can be reasonable or necessary for maximum Zn depletion (especially in case of galvanealed Zn layers), and a more thorough "overleaching" can be promising for maximizing output of Fe salt, especially if additional waste streams comprising FE(III) can be converted into valuable products (e.g. 1 metallic Fe converts 2 Fe³⁺ from Jarosite or Goethite into 3 valuable Fe²⁺ species).

Preferably the leaching rate (or Zn removal rate) of metallic Zn is >90%, more preferably >98%; most preferably >99.5%.

Another embodiment is the dissolution of Fe(III) compounds such as Fe oxides, Goethite or Jarosite in sulfuric acid or in the waste-derived acidic solution comprising H⁺, Zn²⁺, and Fe³⁺. The Fe³⁺ is reduced to Fe²⁺ in the subsequent reaction with galvanized steel scrap.

Taking Zn from galvanized steel scrap as reducing agent for Fe³⁺ obtained after dissolution of EAFD saves the life for Fe as metal; Fe has more value as metal in scrap than as Fe²⁺.

Preferably, the reaction of the waste-derived acidic solution with the galvanized steel scrap is continued until all or nearly all Zn has been dissolved (reaction A) and (subsequently) all Fe3+ has been reduced (reaction B):

Reaction A: Zn + 2 Fe³⁺ => Zn²⁺ + 2 Fe²⁺

Reaction B: 2 Fe³⁺ + Fe => 3 Fe²⁺

The leaching of metallic Zn can be done in a 2-step or multi-step process: Fresh galvanized steel scrap can be subjected to a first leaching step with an acidic solution obtained from previous leaching steps, or with a recycled solution from another process step, e.g. solution obtained from first step ZnS precipitation. And further leaching steps can follow using other solutions with higher acidity or higher Fe³⁺ concentration for improved leaching of the very last fraction of the metallic Zn. This can be done e.g. by dipping baskets with galvanized steel scrap into the corresponding solutions or by passing different leaching solutions one after another through a reactor filled with the scrap.

Partial recycling of solutions can help optimizing the acidity for leaching steps, adjusting Fe³⁺ level for optimized Zn leaching, increasing ion concentration for more efficient separation steps, or fine-tuning pH for ZnS precipitation. For example, the solution obtained after crystallization and separation of FeSO₄ ^{∗} 7 H₂O can be used due to its acidity in the process step of manufacturing the acidic waste derived solution.

If required for the subsequent step of ZnS precipitation, the pH can be raised. This can be achieved by supply of new Zn coated material (reaction C) or continuing leaching metallic Fe (overleaching; reaction D), or by alkaline materials (reaction E) or by reaction with new waste materials (reaction F):

Reaction C: Zn + H₂SO₄ => ZnSO₄ + H₂

Reaction D: Fe + H₂SO₄ => FeSO₄ + H₂

Reaction E: 2 NaOH + H₂SO₄ => Na₂SO₄ + H₂O

Reaction F: Fe₂O₃ + 3 H₂SO₄ => Fe₂(SO₄)₃ + 3 H₂O

Reaction E is least favorable due to the generation of Na₂SO₄ that has to be separated or ends in a wastewater stream. Reaction C and D has the disadvantage of generating hydrogen, but the advantage of simply continuing the leaching step and no additional treatment step being necessary. Reaction C has the advantage over reaction D that no metallic Fe is lost.

The preferred option is reaction F. Raising the pH can be achieved by dissolution of iron oxide (e.g. from wastewater treatment after crystallization of FeSO₄ ^{∗} 7 H₂O), dissolution of EAFD or other waste materials. In a preferred embodiment reaction F is not done after the reaction A or B, but after part of ZnS having been precipitated and separated. However, reaction F requires another treatment according to reaction A or B for reduction of Fe³⁺ to Fe2+.

Overall set-up of process parameters is heavily influenced by acid consumption for dissolving the waste materials for generation of the waste-derived acidic solution. High acid ratio means better dissolution rates for Zn and Fe from waste materials, but also means more effort for maintaining acid balance for complete and selective precipitation of ZnS. Depending on relative volume of waste material and galvanized steel scrap, on Fe and Zn content of each material, on price for Zn and FeSO₄ ^{∗} 7 H₂O, or on logistic or quality constraints, the process can be adjusted with a considerable amount of freedom.

Process control of the Zn leaching step can be done by monitoring redox potential. Complete dissolution of Zn and reduction of Fe3+ each is indicated by characteristic feature of redox potential (ref. US2015/0259766). It is possible to recycle any acidic solution from the inventive process partly back into a previous process step, e.g. the solution obtained after Zn leaching, the solution obtained after ZnS precipitation and separation, or the solution obtained after crystallization of FeSO₄ ^{∗} 7 H₂O. This can help improving the acid balance of the inventive process. Preferably, the acid needed for generation of the waste-derived acidic solution by dissolving a waste product can originate in part from recycling from a later process step.

Use of waste materials as source for Fe³⁺ can generate another source of revenue due to negative prices for some waste products (e.g. EAFD with low Zn content or Jarosite or Goethite). This applies especially for waste products with low zinc content with no satisfactory way for recycling existing for those materials.

### The galvanized steel scrap

Galvanized steel scrap consists of or comprises Fe substrate that is coated with a zinc layer. Fe substrates coated with zinc is often used for corrosion resisting products, e.g. in the automotive industry. Sometimes the protective layer is not pure zinc, but can contain other elements like Sn, Al, or Ni.

Galvanized steel scrap can be subjected to shredding or pressed into packages that are easy to handle, e.g. by dipping of a package into the leaching liquid and taking out again after the Zn leaching step. Another option is filling of a vessel or a column with the galvanized steel scrap and subjecting to the waste-derived acidic solution in continuous or discontinuous manner.

After finishing the leaching of Zn, the metallic Fe substrate depleted from zinc can be washed with diluted acid and/or water for removing adhering solution comprising Zn and anions like sulfate or chloride.

The Fe substrate depleted from zinc can be used as a high-quality raw material for iron smelting processes, e.g., for steelmaking using electric arc furnace, for blast oxygen furnace, or for casting.

### The separation step

Precipitation of ZnS can be made bubbling H₂S in the solution.

A preferred option is:
- precipitation of the obtained Zn²⁺ in the solution as ZnS
- separating the ZnS from the solution comprising dissolved Fe²⁺
- crystallization of the Fe compound by evaporation of water and/or lowering temperature
- separation of the crystals of the Fe compound and recycling the obtained liquid phase back into one of the previous process steps

During precipitation of ZnS with H₂S the pH drops. In a preferred embodiment of the invention the precipitation of ZnS is done in (at least) a 2-step process. In a first step part of the Zn²⁺ is precipitated as ZnS using H₂S off-gas from second step or H₂S obtained from stripping the solution obtained after the second step precipitation and separation of ZnS. And in the second step a high concentration of H₂S is being used in order to shift the equilibrium towards ZnS precipitation. Another option is precipitation of ZnS using Na₂S or (NH₄)₂S.

A preferred embodiment is reacting the precipitated ZnS with H₂SO₄ resulting in a ZnSO₄ solution and gaseous H₂S and recycling the H₂S obtained for precipitation of ZnS again. Or reacting the H₂S with NH₄OH or NaOH for obtaining Na₂S or (NH₄)₂S.

However, ZnS can be the preferred material in case of transportation over a large distance to a zinc manufacturing location being necessary.

There are synergies for dissolving EAFD with H₂SO₄ and de-zincing of galvanized steel scrap in purification (e.g., Cu, Cd, Mn, Ni from Zn-Ni coatings) - if purification is done for creating higher value Zn²⁺ solution.

### Production of Fe salt

The solution obtained after ZnS precipitation and separation of the precipitate is used for reclamation of the Fe compound. Stripping of residual H₂S in the solution can be done by N₂. Crystallization is the preferred option for obtaining a solid Fe compound from solutions comprising FeSO₄. Preferably water is removed from the Fe²⁺ solution by vacuum evaporation and supplying heat in order to prevent temperature to drop down too quickly. A preferred option is to allow temperature to drop down to +5°C, and then separating the FeSO₄ ^{∗} 7 H₂O crystals by filtration or centrifugation. The process of crystallization and separation of FeSO₄ ^{∗} 7 H₂O from acidic solutions is state of the art in the TiO₂ production. Specific parameters depend on composition of solution. General principles and considerations can be found in DE 10 2007 032 418.

Preferably the FeSO₄ concentration in the solution is >100 g/l. Due to the large amount of crystal water being bound in FeSO₄ ^{∗} 7 H₂O water is efficiently removed from the solution resulting in significant drop of pH. Final concentration of saturated solution at +5°C is ca. 35-40 g/I Fe²⁺.

Due to evaporation of water from the FeSO₄ solution and water capturing of the heptahydrate the acidity of the solution gets even significantly higher (pH<<0.5). Therefore, this solution or part of this solution can be used for closing the loop and recycling back into one of the previous steps: for reaction with EAFD or for Zn leaching from galvanized steel scrap.

At least part of this solution leaves the process as waste water and a sink for some ions, e.g. Na or K. Preferably, Fe is precipitated by alkaline treatment, separated and recycled into one of the preceding steps, e.g. for generation of the waste derived acidic solution or for raising the pH according to reaction F.

### Electrowinning

Careful precipitation of ZnS and washing the precipitate with diluted H₂SO₄ (pH ~2) can achieve a nearly complete separation of Fe and other impurities. This ZnS can be fed into the primary Zn production process.

After conversion of ZnS into ZnSO₄ solution by reacting with H₂SO₄ the solution obtained can be used for electrowinning of metallic zinc; further purification by a cementation step with metallic zinc powder is possible for removing impurities even more, e.g., Ni, Cd, Cu, and Fe. As there are only small concentrations of these impurities present the demand for zinc powder is very low.

More details on cementation with further references can be found in: DEZINCING OF GALVANIZED STEEL by J. Grogan, Colorado Scholl of Mines: https://pdfcoffee.com/qdownload/dezincinc-of-galvanized-steel-pdf-pdf-free.html, p. 25.

### Example 1: Recycling of electric arc furnace dust (EAFD) and de-zincing of galvanized steel scrap

An acidic solution is prepared by reacting electric arc furnace dust (EAFD) with concentrated sulfuric acid and dissolving the obtained reaction product in water. After separation of the solid residue an acidic solution comprising Fe³⁺ and Zn²⁺ is obtained.

Galvanized steel scrap is leached with this acidic solution until the Zn coating is dissolved to >99% and the Fe³⁺ is reduced to Fe²⁺. This can be made by dipping baskets filled with scrap into acidic solution or by passing acidic solution through a column filled with scrap. The obtained Zn-free metallic Fe substrate can be washed with water, dried and used as Fe resource for steelmaking or in foundries.

A typical mass ratio of EAFD and galvanized steel scrap is 1:8.

The solution obtained from the Zn leaching step comprising Zn²⁺ and Fe²⁺ treated with H₂S gas for precipitating of ZnS. ZnS is separated by filtration or centrifugation and washed with diluted H₂SO₄ (pH ~2) to remove FeSO₄. The ZnS can be used as raw material in primary zinc production or can be converted into a ZnSO₄ solution by dissolving in H₂SO₄ for electrowinning of zinc.

The FeSO₄ solution obtained after separation of the ZnS precipitate is taken for crystallization of FeSO₄ ^{∗} 7 H₂O (copperas) by vacuum evaporation of water and allowing the system to cool down to 5°C. The FeSO₄ solution obtained after separation of the copperas can be recycled back (completely or in part) into one of the previous process steps.

Products obtained: Zn depleted scrap, ZnS (or ZnSO₄), and FeSO₄ ^{∗} 7 H₂O (copperas)

### Example 2: Recycling of electric arc furnace dust (EAFD) (comparison or prior art example)

Electric arc furnace dust (EAFD) is reacted with concentrated sulfuric acid and the obtained reaction product is dissolved in water. After separation of the solid residue an acidic solution comprising Fe³⁺ and Zn²⁺ is obtained.

This acidic solution is treated with (galvanized) steel scrap until the Fe³⁺ is completely reduced to Fe²⁺ while Zn and Fe of the scrap are being dissolved.

This can be made by dipping baskets filled with scrap into acidic solution or by passing the acidic solution through a column filled with scrap. The scrap is completely dissolved or taken for the next batch of solution comprising Fe³⁺.

The solution obtained from the reducing treatment with (galvanized) scrap step comprising Zn²⁺ and Fe²⁺ is treated with H₂S gas for precipitating of ZnS. ZnS is separated by filtration or centrifugation and washed with diluted H₂SO₄ (pH ~2) to remove FeSO₄. The ZnS can be used as raw material in primary zinc production or can be converted into a ZnSO₄ solution by dissolving in H₂SO₄ for electrowinning of zinc.

The FeSO₄ solution obtained after separation of the ZnS precipitate is taken for crystallization of FeSO₄ ^{∗} 7 H₂O (copperas) by vacuum evaporation of water and allowing the system to cool down to 5°C. The FeSO₄ solution obtained after separation of the copperas can be recycled back (completely or in part) into one of the previous process steps.

Products obtained: ZnS (or ZnSO₄), and FeSO₄ ^{∗} 7 H₂O (copperas)

No Zn depleted scrap is obtained despite the same number and order of treatments as in example 1.

### Example 3: Recycling of Jarosite and de-zincing of galvanized steel scrap

Jarosite is dissolved in diluted H₂SO₄ (preferably waste H₂SO₄ from TiO₂ production).

Galvanized steel scrap is leached with this acidic solution until the Zn coating is dissolved to >99% and the Fe³⁺ is reduced to Fe²⁺. This can be made by dipping baskets filled with scrap into acidic solution or by-passing acidic solution through a column filled with scrap. The obtained Zn-free metallic Fe substrate can be washed with water, dried and used as Fe resource for steelmaking or in foundries.

The solution obtained from the Zn leaching step comprising Zn²⁺ and Fe²⁺ is treated with H₂S gas for precipitating of ZnS. ZnS is separated by filtration or centrifugation and washed with diluted H₂SO₄ (pH ~2) to remove FeSO₄. The ZnS can be used as raw material in primary zinc production or can be converted into a ZnSO₄ solution by dissolving in H₂SO₄ for electrowinning of zinc.

The FeSO₄ solution obtained after separation of the ZnS precipitate is taken for crystallization of FeSO₄ ^{∗} 7 H₂O (copperas) by vacuum evaporation of water and allowing the system to cool down to 5°C. The FeSO₄ solution obtained after separation of the copperas can be recycled back (completely or in part) into one of the previous process steps.

Products obtained: Zn depleted scrap, ZnS (or ZnSO₄), FeSO₄ ^{∗} 7 H₂O (copperas); whereby three low-cost waste materials are being recycled and converted into valuable products: Jarosite, waste diluted H₂SO₄, galvanized steel scrap

## Claims

1. Process for depletion of zinc from Zn-coated Fe by
a) Subjecting the Zn-coated Fe to a leaching step in a waste-derived acidic solution comprising Fe³⁺ to provide an acidic solution containing Zn²⁺ and Fe²⁺;
b) Obtaining a metallic Fe substrate depleted from zinc; and
c) Separating Fe²⁺ from Zn²⁺ to provide a Zn²⁺-containing product and a Fe²⁺ salt.

2. Process according to claim 1 **characterized in that** the waste-derived acidic solution comprising Fe³⁺ is made from dissolution of electric arc furnace dust, Jarosite, or Goethite, or is made from waste H₂SO₄ from TiO₂ production using the sulfate process, waste acidic solutions from manufacturing of zinc, steel pickling solutions comprising FeCl₂ or FeSO₄, waste metal chlorides from TiO₂ chlorination of TiO₂ manufacturing using the chloride process, iron chloride solutions from production of synthetic rutile or any combinations of the waste products listed above.

3. Process according to claim 1 or 2 **characterized in that** the waste-derived acidic solution comprises Zn²⁺.

4. Process according to any one of claims 1 to 3, wherein the Zn-coated Fe is galvanized steel scrap or a composition comprising galvanized steel scrap.

5. Process according to claims 1 - 4 **characterized in that** during leaching of step a) there is an excess of Fe³⁺ with respect to metallic Zn with an atomic ratio Fe³⁺/ZnO >2, preferably >4, most preferably >10.

6. Process according to one or more of claims 1 to 4, wherein the acid obtained after separating Fe²⁺ from Zn²⁺ is used to treat a waste material to produce a waste-derived acid comprising Fe³⁺.

7. Process according to claims 1 - 4, comprising the steps of
i. Leaching a Zn containing waste material, preferably EAFD, with H₂SO₄
ii. separating the residue of undissolved material and obtaining a waste-derived acidic solution comprising H⁺, Zn²⁺, and Fe³⁺
iii. using the obtained waste-derived acidic solution for depletion of zinc from galvanized steel scrap or a composition comprising galvanized steel scrap
iv. obtaining the scrap depleted from zinc and a solution comprising ZnSO₄ and FeSO₄, and
v. separating Fe²⁺ from Zn²⁺ to provide a Zn²⁺-containing product and a Fe²⁺ salt.

8. Process according to claim 1 or 5 **characterized by** a leaching rate of metallic Zn from the Zn-coated Fe of >90%, preferably >98%; most preferably >99.5%.

9. Process according to claim 1 or 2 **characterized by** separating the obtained Zn²⁺ from the obtained Fe²⁺ by precipitation.

10. Process according to claims 1 - 7, comprising the following additional steps:
• precipitation of the obtained Zn²⁺ as ZnS
• separating the ZnS from the solution comprising dissolved Fe²⁺
• crystallization of the Fe compound by evaporation of water and/or lowering temperature
• separation of the crystals of the Fe compound and recycling the obtained liquid phase into one of the previous process steps

11. Process according to claim 8 **characterized by** reacting the precipitated ZnS with H₂SO₄ resulting in ZnSO₄ and H₂S and recycling the H₂S obtained for precipitation of ZnS.

12. Process according to claims 1 - 10 **characterized by** taking Zn depleted scrap thus obtained as raw material for iron smelting processes (electric arc furnace, blast furnace, basic oxygen furnace, and casting)

13. Use of waste-derived acidic solution comprising Fe³⁺ for use as an oxidizing agent, preferably for de-zincing, wherein the waste is EAFD.
